# EUROPEAN PATENT APPLICATION

(11) **EP 4 345 604 A1**
(43) Date of publication of application: **03.04.2024**
(21) Application number: 21947650.4
(22) Date of filing: 01.07.2021
(51) Int. Cl.: G06F 8/65

(54) **OVER-THE-AIR (OTA) UPGRADING METHOD AND APPARATUS**

(71) Applicant: Huawei Technologies Co., Ltd., Longgang Shenzhen, Guangdong 518129 (CN)
(72) Inventor: MA, Tao, Shenzhen, Guangdong 518129 (CN); ZHOU, Zheng, Shenzhen, Guangdong 518129 (CN)
(74) Representative: Maiwald GmbH
(86) International application number: PCT/CN2021/104077
(87) International publication number: WO 2023/272699

(57) **Abstract**

Embodiments of this application provide an OTA upgrade method and an apparatus, which are applied to the field of vehicle-to-everything. In specific application, a server sends a first upgrade task, where a first execution policy corresponding to the first upgrade task belongs to an execution policy set, the execution policy set includes a second execution policy, and the second execution policy is different from the first execution policy; and a terminal device determines the first execution policy by receiving the first upgrade task, and controls execution of the first upgrade task based on the first execution policy. In this manner, an execution policy set including at least two execution policies is designed, so that an OTA upgrade task can be flexibly scheduled, and upgrade efficiency can be improved.

## Description

### TECHNICAL FIELD

Embodiments of this application relate to the field of vehicle-to-everything technologies, and in particular, to an OTA upgrade method and an apparatus.

### BACKGROUND

With development of society and advancement of science and technology, intelligent vehicles are increasingly widely used in the fields of intelligent driving and self-driving. The intelligent vehicle has a complex system, including dozens of or even hundreds of electronic control units (electronic control unit, ECU). Various complex functions of the intelligent vehicle are implemented through collaboration among the ECUs.

An original equipment manufacturer (original equipment manufacturer, OEM) maintains and upgrades various functions of the intelligent vehicle mainly by upgrading ECUs related to these functions. An over-the-air (over the air, OTA) technology may be used to upgrade vehicle-related hardware or software, helping the manufacturer reduce recall costs, fast respond to requirements, and improve user experience. With development of the intelligent vehicles, functions implemented by the intelligent vehicle through collaboration between the ECUs are more diversified, which leads to more diverse objects to be upgraded through OTA. How to design a flexible OTA upgrade scheduling method to improve upgrade efficiency is a technical problem to be urgently resolved by a person skilled in the art.

### SUMMARY

Embodiments of this application disclose an OTA upgrade method and a corresponding apparatus, to flexibly schedule an OTA upgrade task.

According to a first aspect, an upgrade method is provided, and the method may be performed by a terminal device or a chip disposed in the terminal device. The method includes: receiving a first upgrade task; determining a first execution policy corresponding to the first upgrade task, where the first execution policy belongs to an execution policy set, the execution policy set includes a second execution policy, and the first execution policy is different from the second execution policy; and controlling execution of the first upgrade task based on the first execution policy.

Optionally, the method may alternatively be performed by an OTA management module included in the terminal device or a chip disposed in the OTA management module. For example, the method may be performed by the OTA management module.

According to the upgrade method provided in this application, the execution policy set is designed, and different execution policies correspond to different upgrade tasks, so that an OTA upgrade task can be flexibly scheduled, and upgrade efficiency is improved.

With reference to the first aspect, in some implementations of the first aspect, the method may further include: obtaining first indication information, where the first indication information is used to indicate the first execution policy or indicate a first level of the first upgrade task, and the first execution policy corresponds to the first level.

In this solution, the first execution policy can be flexibly indicated by using the first indication information. For example, when the first indication information indicates the first level, an execution policy corresponding to the first level is determined as the first execution policy based on a mapping relationship between a first level and an execution policy.

With reference to the first aspect, in some implementations of the first aspect, the method may further include: determining the first execution policy based on upgrade content or an upgrade function of the first upgrade task.

For example, the first execution policy is determined based on a mapping relationship between upgrade content and an execution policy, or based on a mapping relationship between an upgrade function and an execution policy. The mapping relationship may be preconfigured by a server or specified in a protocol.

In this solution, the first execution policy is determined based on the preconfigured mapping relationship or the mapping relationship specified in the protocol, so that signaling overheads can be reduced.

With reference to the first aspect, in some implementations of the first aspect, the method further includes: sending second information to an installation prompt control module and/or an OTA upgrade module, where the second information is used to indicate an installation prompt corresponding to the first execution policy.

In this solution, the installation prompt can be flexibly indicated by using the second information, so that the different upgrade tasks can correspond to different installation prompts, thereby ensuring that the different upgrade tasks are differently executed, implementing flexible scheduling of an OTA task, and improving upgrade efficiency.

With reference to the first aspect, in some implementations of the first aspect, the method further includes: After determining the first execution policy, the OTA management module downloads an upgrade package included in the first upgrade task at a download rate corresponding to the first execution policy.

By using this solution, an upgrade package included in an upgrade task corresponding to an execution policy can be downloaded at a download rate corresponding to the execution policy, so that the different upgrade tasks can correspond to different download rates, thereby ensuring that the different upgrade tasks are differently executed, implementing flexible scheduling of an OTA task, and improving upgrade efficiency.

With reference to the first aspect, in some implementations of the first aspect, the method further includes: The OTA management module sends third information to a power management module, where the third information is used to indicate the power management module to detect remaining power or state of charge of the terminal device, or indicate the power management module to feed back the remaining power or the state of charge of the terminal device.

In this solution, the remaining power or the state of charge can be flexibly indicated by using the second information, so that installation of the different upgrade tasks can correspond to different remaining power or states of charge, thereby ensuring that the different upgrade tasks are differently executed, implementing flexible scheduling of an OTA task, and improving upgrade efficiency.

With reference to the first aspect, in some implementations of the first aspect, the method further includes: The OTA management module controls, based on a storage policy corresponding to the first execution policy, storage of the upgrade package included in the first upgrade task.

In this solution, the different upgrade tasks can be stored by using different storage resources, to ensure that the different upgrade tasks are differently executed, implement flexible scheduling of an OTA task, and improve upgrade efficiency.

With reference to the first aspect, in some implementations of the first aspect, the method further includes: The OTA management module sends fourth information to the OTA upgrade module, where the fourth information is used to indicate a maximum quantity of installation times of the upgrade package included in the first upgrade task.

In this solution, the maximum quantity of installation times can be flexibly indicated by using the fourth information, so that installation of the different upgrade tasks can correspond to different maximum quantities of installation times, thereby ensuring that the different upgrade tasks are differently executed, implementing flexible scheduling of an OTA task, and improving upgrade efficiency.

According to a second aspect, an upgrade method is provided. The method may be performed by a server or a chip disposed in the server. The method includes: generating a first upgrade task, where a first execution policy corresponding to the first upgrade task belongs to an execution policy set, the execution policy set includes a second execution policy, and the first execution policy is different from the second execution policy; and sending the first upgrade task.

According to the upgrade method provided in this application, the server can distinguish between different upgrade tasks by using different execution policies. The execution policy set is designed, and the different execution policies correspond to the different upgrade tasks, so that an OTA upgrade task can be flexibly scheduled, and upgrade efficiency is improved.

With reference to the second aspect, in some implementations of the second aspect, the method may further include: sending first indication information, where the first indication information is used to indicate the first execution policy or indicate a first level of the first upgrade task, and the first execution policy corresponds to the first level.

In this solution, the first execution policy can be flexibly indicated by using the first indication information. With reference to the first aspect and the second aspect, in some implementations of the first aspect and the second aspect, the first level belongs to a task execution level set, and the task execution level set includes at least two task execution levels. Optionally, a classification principle of different task execution levels includes one or more of the following items: The different task execution levels are classified based on function security levels of upgrade objects corresponding to upgrade tasks. The different task execution levels are classified based on different severity of defects repaired by the upgrade tasks. The different task execution levels are classified based on different influences of new functions of the upgrade tasks on driving experience of a user. The different task execution levels are classified based on different business values of content of the upgrade tasks to a vehicle manufacturer. The different task execution levels are classified based on different priorities of the upgrade objects corresponding to the upgrade tasks. The different task execution levels are classified based on different urgency degrees of the upgrade tasks. The different task execution levels are classified based on user levels. Further, optionally, the different task execution levels are used to represent different importance of OTA upgrade tasks.

With reference to the first aspect and the second aspect, in some implementations of the first aspect and the second aspect, the different execution policies correspond to the different task execution levels.

In this solution, differentiated execution policies correspond to the different task execution levels, and the different execution policies can be used based on importance of different tasks, to ensure that an important OTA upgrade task can be executed more preferentially or more reliably.

With reference to the first aspect and the second aspect, in some implementations of the first aspect and the second aspect, the execution policy set includes at least two installation prompts corresponding to the upgrade task, and the first execution policy and the second execution policy correspond to different installation prompts.

For example, the installation prompt includes one or more of the following items: a display location of the installation prompt, display brightness of the installation prompt, or a font size of the installation prompt.

Based on the different installation prompts, different installation prompt policies can be used for the different upgrade tasks, so that an OTA upgrade task is flexibly scheduled, and upgrade efficiency is improved.

With reference to the first aspect and the second aspect, in some implementations of the first aspect and the second aspect, the execution policy set includes at least two download rates corresponding to the upgrade task, and the first execution policy and the second execution policy correspond to different download rates of the upgrade task.

Based on the different download rates, it can ensure that the different download rates are used for the different upgrade tasks, so that an OTA upgrade task is flexibly scheduled, and upgrade efficiency is improved.

With reference to the first aspect and the second aspect, in some implementations of the first aspect and the second aspect, the execution policy set includes at least two remaining power thresholds corresponding to the upgrade task, and the first execution policy and the second execution policy correspond to different remaining power thresholds.

Based on the different remaining power thresholds, it can ensure that the different remaining power thresholds are used for the different upgrade tasks, so that an OTA upgrade task is flexibly scheduled, and upgrade efficiency is improved.

With reference to the first aspect and the second aspect, in some implementations of the first aspect and the second aspect, the execution policy set includes at least two storage resources corresponding to the upgrade task, and the first execution policy and the second execution policy correspond to different storage resources.

For example, storage resources corresponding to the first execution policy include storage resources located in K storage components, where K is an integer not less than 1, and the storage component includes at least one electronic control unit.

Based on the different storage resources, it can ensure that the different storage resources are used for the different upgrade tasks, so that an OTA upgrade task is flexibly scheduled, and upgrade efficiency is improved.

With reference to the first aspect and the second aspect, in some implementations of the first aspect and the second aspect, the execution policy set includes at least two maximum quantities of installation times corresponding to the upgrade task, and the first execution policy and the second execution policy correspond to different maximum quantities of installation times.

Based on the different maximum quantities of installation times, it can ensure that the different maximum quantities of installation times are used for the different upgrade tasks, so that an OTA upgrade task is flexibly scheduled, and upgrade efficiency is improved.

With reference to the first aspect and the second aspect, in some implementations of the first aspect and the second aspect, the first execution policy set and the second execution policy set correspond to different execution attributes, and the execution attribute includes one or more of the following items: an installation prompt policy, a download policy, a detection policy, a storage policy, and an installation policy.

With reference to the first aspect and the second aspect, in some implementations of the first aspect and the second aspect, the first execution policy set and the second execution policy set correspond to a same execution attribute, but at least one execution attribute has a different execution mode. The execution attribute includes one or more of the following items: an installation prompt policy, a download policy, a detection policy, a storage policy, and an installation policy.

According to a third aspect, a communication apparatus is provided, including a processor and a transceiver, to perform the method according to any one of the first aspect or the possible implementations of the first aspect, or perform the method according to any one of the second aspect or the possible implementations of the second aspect. The transceiver is configured to perform functions related to transmission and reception. Optionally, the transceiver includes a receiver and a transmitter, or a transmitter machine and a receiver machine.

With reference to the third aspect, in some implementations of the third aspect, the communication apparatus is a communication chip, and the transceiver may be an input/output circuit or a port of the communication chip.

With reference to the third aspect, in some implementations of the third aspect, the communication apparatus further includes a memory, and the memory is coupled to a processor included in the communication apparatus. The processor may be configured to execute instructions in the memory, so that the apparatus is enabled to perform the method according to any one of the first aspect or the possible implementations of the first aspect, or perform the method according to any one of the second aspect or the possible implementations of the second aspect. Optionally, the apparatus may further include an interface circuit, and a processing module is coupled to the interface circuit.

With reference to the third aspect, in some implementations of the third aspect, the communication apparatus further includes a unit configured to perform the method according to any one of the first aspect or the possible implementations of the first aspect, or a unit configured to perform the method according to any one of the second aspect or the possible implementations of the second aspect.

According to a fourth aspect, a terminal device is provided, including a communication apparatus configured to perform the method according to any one of the first aspect or the possible implementations of the first aspect. Specifically, the terminal device may be a vehicle, a robot, an unmanned aerial vehicle, or the like, for example, a vehicle or a slow transport vehicle.

According to a fifth aspect, a server is provided, including a communication apparatus configured to perform the method according to any one of the second aspect or the possible implementations of the second aspect. Specifically, the server may be deployed on an electronic device having a wireless communication function and a storage function, or may be deployed on a virtual machine (virtual machine, VM) or a container on a cloud. The cloud may be a cluster including a plurality of electronic devices.

According to a sixth aspect, a chip is provided, and the chip includes one or more processors and an interface circuit. The chip is configured to perform the method according to any one of the first aspect or the possible implementations of the first aspect, or perform the method according to any one of the second aspect or the possible implementations of the second aspect.

According to a seventh aspect, this application provides a computer-readable storage medium, and the computer-readable storage medium stores a computer program or instructions. When the computer program or the instructions is or are executed by a communication apparatus, the communication apparatus is enabled to perform the method according to any one of the first aspect or the possible implementations of the first aspect, or the communication apparatus is enabled to perform the method according to any one of the second aspect or the possible implementations of the second aspect.

According to an eighth aspect, this application provides a computer program product, and the computer program product includes a computer program or instructions. When the computer program or the instructions is or are executed by a communication apparatus, the communication apparatus is enabled to perform the method according to any one of the first aspect or the possible implementations of the first aspect, or the communication apparatus is enabled to perform the method according to any one of the second aspect or the possible implementations of the second aspect.

### BRIEF DESCRIPTION OF DRAWINGS

The following describes accompanying drawings used in embodiments of this application.
FIG. 1 is a schematic diagram of an upgrade system architecture according to an embodiment of this application;
FIG. 2 is a schematic diagram of a terminal device according to an embodiment of this application;
FIG. 3 is a schematic diagram of another upgrade system architecture according to an embodiment of this application;
FIG. 4 is a schematic diagram of another upgrade system architecture according to an embodiment of this application;
FIG. 5 is a schematic flowchart corresponding to an upgrade method according to an embodiment of this application;
FIG. 6 is a schematic diagram of a communication apparatus according to an embodiment of this application;
FIG. 7 is a schematic diagram of another communication apparatus according to an embodiment of this application; and
FIG. 8 is a schematic diagram of a structure of a chip according to an embodiment of this application.

### DESCRIPTION OF EMBODIMENTS

The following describes in detail technical solutions in embodiments of this application with reference to accompanying drawings in the embodiments of this application.

It should be noted that in the embodiments of this application, words such as "for example" or "such as" are used to indicate an example, an illustration, or an explanation. Any embodiment or design solution described as "for example" or "such as" in this application should not be explained as being preferred or advantageous over other embodiments or design solutions. Exactly, use of the words such as "for example" or "such as" is intended to present related concepts in a specific manner.

The term "and/or" mentioned in the embodiments of this application is used to describe an association relationship between associated objects and represents that three relationships may exist. For example, A and/or B may represent the following three cases: Only A exists, both A and B exist, and only B exists. A and B each may be singular or plural. The character "/" usually indicates an "or" relationship between associated objects.

In addition, unless otherwise stated, in embodiments of this application, ordinal numbers such as "first" and "second" are intended to distinguish between a plurality of objects, but are not intended to limit orders, time sequences, priorities, or importance of the plurality of objects. For example, first information and second information are merely intended to distinguish between different information, but do not indicate that the two types of information are different in content, priorities, sending sequences, importance, or the like.

The following describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of a new service scenario, the technical solutions provided in this application are also applicable to similar technical problems.

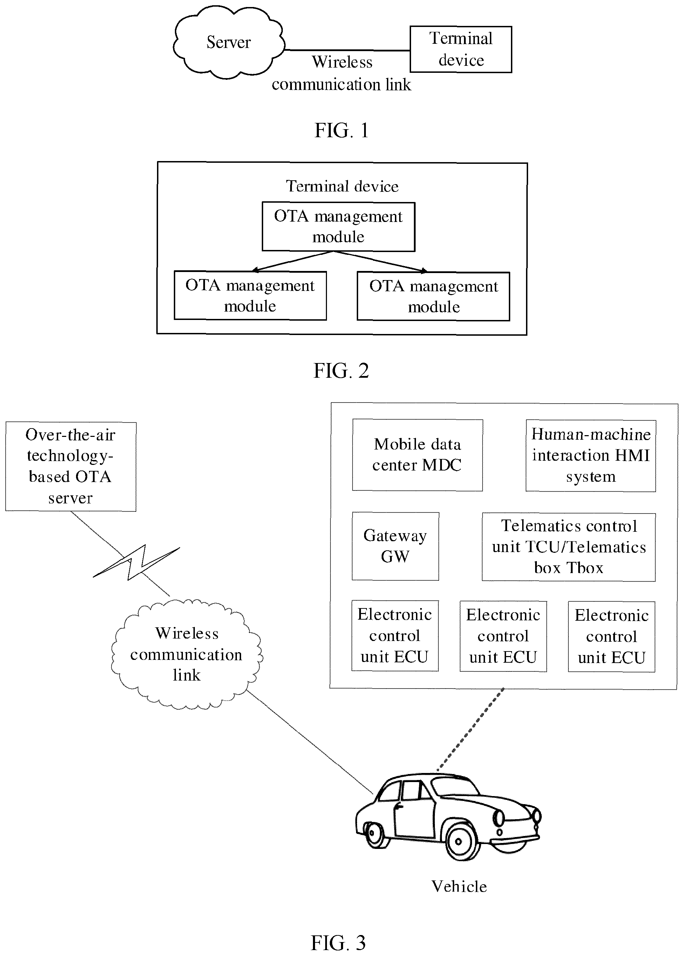

FIG. 1 is a schematic diagram of an upgrade system architecture applicable to an embodiment of this application. As shown in FIG. 1, the upgrade system architecture may include a server, a wireless communication link, and a terminal device.

For example, the server in this embodiment of this application refers to an apparatus that can serve as a manufacturer or an OEM to provide OTA upgrade for a terminal device. Specifically, the server may be deployed on an electronic device having a wireless communication function and a storage function, or may be deployed on a virtual machine or a container on a cloud. The cloud may be a cluster including a plurality of electronic devices.

For example, the wireless communication link in this embodiment of this application may be a link implemented by using a communication network. The communication network may be a local area network, or may be a wide area network transferred by using a relay (relay) device, or may include a local area network and a wide area network. When the communication network is a local area network, the communication network may be a Wi-Fi hotspot network, a Wi-Fi point-to-point (point to point, P2P) network, a Bluetooth network, a Zigbee network, a near field communication (near field communication, NFC) network, a future possible general-purpose short-range communication network, or the like. When the communication network is a wide area network, the communication network may be a 3rd-generation wireless telephone technology (3rd-generation wireless telephone technology, 3G) network, a 4th generation mobile communication technology (4th-generation mobile communication technology, 4G) network, a 5th-generation mobile communication technology (5th-generation mobile communication technology, 5G) network, a future evolved mobile communication technology network (including but not limited to 6G or the like), a public land mobile network (public land mobile network, PLMN), the Internet (Internet), or the like. This is not limited in this embodiment of this application.

For example, the terminal device described in this embodiment of this application refers to an apparatus that supports an OTA upgrade service provided by the server. For example, the terminal device may be a transportation means or an intelligent device. Specifically, the transportation means may include a motor vehicle (for example, an unmanned vehicle, an intelligent vehicle, an electric vehicle, or a digital vehicle), an unmanned aerial vehicle, a rail motor car, a traffic light, or the like. The intelligent device may include a mobile phone, a tablet computer, a notebook computer, a personal digital assistant, a point-of-sale terminal, an in-vehicle computer, an augmented reality device, virtual reality, a wearable device, an in-vehicle terminal, or the like.

FIG. 2 is a schematic diagram of a terminal device according to an embodiment of this application. As shown in FIG. 2, the terminal device includes an OTA management module (which may be referred to as an OTA Master module) and a plurality of OTA upgrade modules (which may be referred to as OTA Slave modules). The OTA management module is configured to receive an upgrade package from a server, and send an upgrade package of an upgrade object for which an OTA upgrade module is responsible to the OTA upgrade module. The OTA upgrade module is configured to install the upgrade package, and feed back an installation result of the upgrade package to the OTA management module. Optionally, a specific form of the upgrade object is not limited in this embodiment of this application. An intelligent vehicle is used as an example. The upgrade object may be a component in the vehicle, or may be software in the component.

An intelligent vehicle is used as an example. FIG. 3 is a schematic diagram of another upgrade system architecture applicable to an embodiment of this application. As shown in FIG. 3, the upgrade system architecture may include an OTA server, a wireless communication link, and a vehicle. The vehicle includes at least a gateway (gateway, GW) and a software and hardware integrated platform configured to support intelligent driving, namely, an in-vehicle computing platform (vehicle computing platform), for example, components such as a mobile data center (mobile data center, MDC), a human-machine interaction (human-machine interaction, HMI) system, a telematics control unit (telematics control unit, TCU), a telematics box (telematics box, Tbox), and an electronic control unit ECU. The GW is a core component in an electronic and electrical architecture of the entire vehicle. The GW serves as a data exchange hub of the entire vehicle network, and may route, in different networks, network data of a controller area network (controller area network, CAN), a local interconnect network (local interconnect network, LIN), a multimedia software upgrade (media oriented system transport, MOST) network, and the like. The MDC may be configured to implement a self-driving function of a vehicle. The HMI is an infotainment system of a vehicle. The TCU and the Tbox are mainly configured to communicate with an external device (for example, a mobile phone or a background system) of a vehicle. The ECU is a vehicle-specific microcomputer controller. The ECU includes but is not limited to a vehicle integration unit (vehicle integrated/integration unit, VIU), a cockpit domain controller (cockpit domain controller, CDC), a vehicle domain controller (vehicle domain controller, VDC), and the like. For example, to-be-upgraded components include but are not limited to the GW, the MDC, the HMI, the TCU, the Tbox, and the ECU. The to-be-upgraded components may include one or more of the GW, the MDC, the HMI, the TCU, the Tbox, and the ECU.

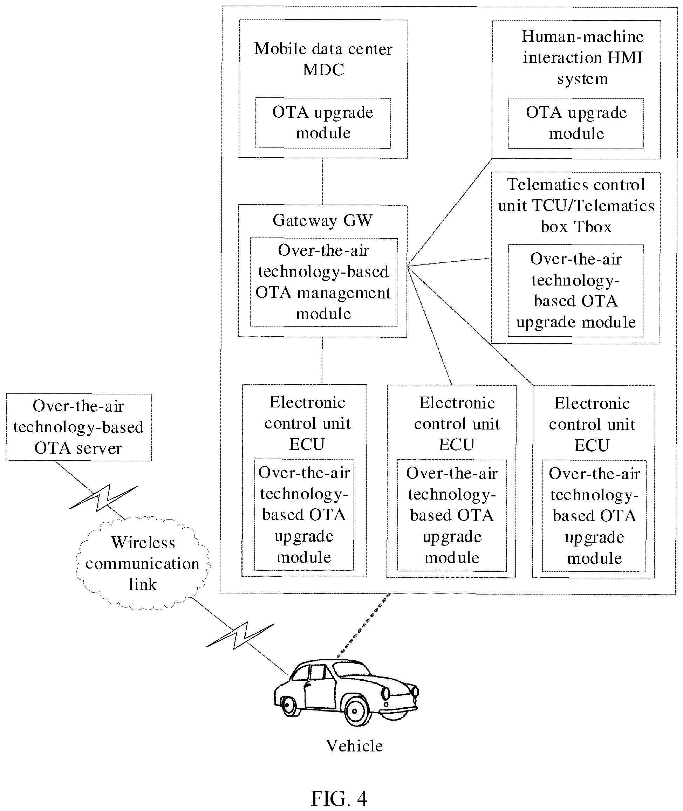

OTA upgrade of the entire vehicle usually includes upgrade of a plurality of components in the vehicle. The OTA management module located in the intelligent vehicle may run on components such as the GW and the Tbox of the vehicle, and coordinate an OTA upgrade module of another component to complete the upgrade of the entire vehicle together. FIG. 4 is a schematic diagram of another upgrade system architecture applicable to an embodiment of this application. As shown in FIG. 4, an OTA management module is deployed in a GW of a vehicle, and OTA upgrade modules are deployed in other components of the vehicle. The OTA management module may coordinate OTA upgrade modules deployed on all components to complete OTA upgrade of the entire vehicle together.

In an upgrade process, the OTA management module commands the OTA upgrade modules to sequentially install upgrade packages based on a dependency relationship between the upgrade packages. However, functions upgraded or defects repaired by using different OTA upgrade tasks have different impact on the terminal device. Therefore, the different OTA tasks have different degrees of importance or degrees of urgency. For example, an OTA upgrade version in which a navigation on pilot (navigation on pilot, NOP) function is introduced is more important to a vehicle manufacturer and a user than an OTA upgrade version in which a front passenger seat memory is added. For another example, some OTA upgrade tasks are used to repair important security defects. If the important security defect is not repaired in a timely manner, even vehicle recall occurs. On the contrary, some OTA upgrade tasks are only used to repair common faults (bugs). In comparison, an OTA upgrade task for repairing the important security defect is more important. If upgrade packages of all tasks are installed based on a same execution policy, an important upgrade task cannot obtain sufficient resources. Consequently, the important upgrade tasks cannot be completed reliably or in a timely manner.

In view of this, an embodiment of this application provides an upgrade method. In the method, a first execution policy corresponding to a first upgrade task is determined, and execution of the first upgrade task is controlled based on the first execution policy. The first execution policy belongs to an execution policy set, the execution policy set includes a second execution policy, and the second execution policy is different from the first execution policy. In this manner, different upgrade tasks can be distinguished by using different execution policies, so that an OTA upgrade task is flexibly scheduled, and upgrade efficiency is improved.

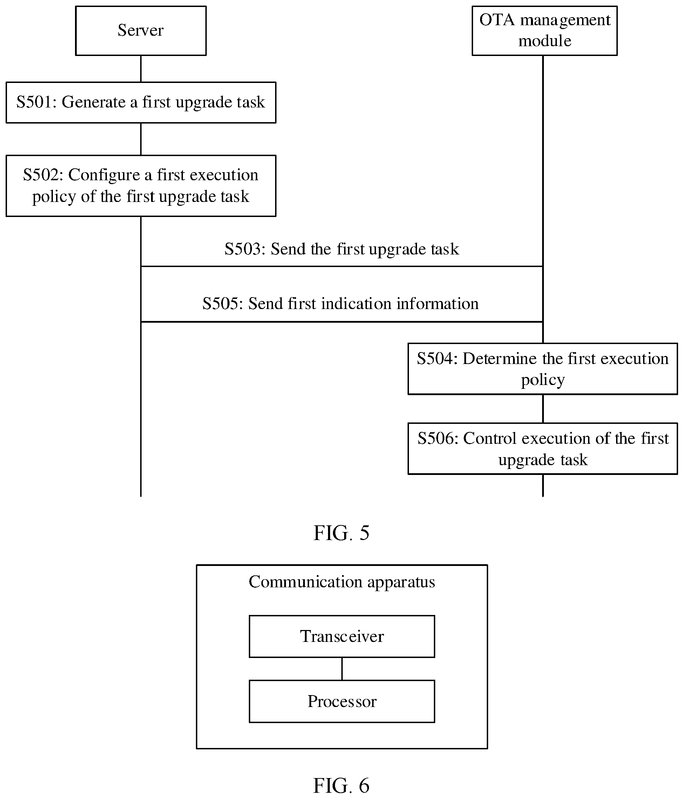

The following uses a specific embodiment to describe the upgrade method provided in this embodiment of this application. It should be noted that, for clarity of description, an OTA management module is used as an example for description in the following embodiment. Alternatively, the OTA management module may be replaced with a terminal device. FIG. 5 is a schematic flowchart corresponding to an upgrade method according to an embodiment of this application. Further, the method may be implemented based on the upgrade system architectures shown in FIG. 1 to FIG. 4. The method may include:

S501: A server generates a first upgrade task, where a first execution policy corresponding to the first upgrade task belongs to an execution policy set, the execution policy set includes a second execution policy, and the first execution policy is different from the second execution policy.

The server may create an upgrade task and manage the upgrade task, including deploying the upgrade task, terminating the upgrade task, suspending the upgrade task, and rerunning the upgrade task, determining priorities of a plurality of upgrade tasks, or the like. For example, that the server generates the upgrade task may be understood as that the server creates the upgrade task. The upgrade task may include one or more upgrade packages.

For example, a vehicle is used as an example. The upgrade task is to agree on an upgrade process of a batch of to-be-upgraded vehicles. For example, the upgrade task usually specifies which in-vehicle devices in the batch of vehicles need to be upgraded, what notification needs to be sent to users before upgrade, what content needs to be prompted to the users, an upgrade package used for the upgrade, and the like. Further, the in-vehicle devices may include an HMI, a battery management system (battery management system, BMS), an infotainment system, and the like. This is not limited in this embodiment of this application.

For example, different upgrade tasks may correspond to different functions. An intelligent vehicle is used as an example, an upgrade task 1 is used to repair a major safety defect of the intelligent vehicle, and an upgrade task 2 is used to improve a cockpit seat memory function to provide better user experience.

For example, different upgrade tasks may correspond to different upgrade objects. For example, for an intelligent vehicle, an upgrade task 3 corresponds to firmware upgrade (firmware over the air, FOTA), and an upgrade task 4 corresponds to software upgrade (software over the air, SOTA). Upgrade of the FOTA includes hardware, for example, downloading a complete solid image for a flash memory of an ECU, or patching existing firmware, or updating a flash memory. The SOTA tends to upgrade application software, for example, updating display on an HMI interface of the intelligent vehicle.

In an implementation, the execution policy set includes one or more of the following execution attributes: an installation prompt policy, a download policy, a detection policy, a storage policy, and an installation policy.

For example, the installation prompt policy includes a manner for prompting a user to install an upgrade task. The installation prompt policy may include one or more of the following execution modes:
(1) The upgrade task is prompted on a user interface (user interface, UI) by using which font. Further, for example, the upgrade task is prompted on the UI by using Times New Roman.
(2) The upgrade task is prompted on the UI by using which font size. Further, for example, the upgrade task is prompted on the UI by using a font size of 12.
(3) The upgrade task is prompted on the UI by using which font color. Further, for example, the upgrade task is prompted on the UI by using a red font.
(4) A display location of an installation prompt of the upgrade task on the UI. Further, for example, the installation prompt policy may be to prompt the upgrade task in the left half or the upper half of the UI.
(5) The upgrade task is prompted on the UI by using which brightness.

It should be noted that the UI is a bridge for interaction and information exchange between the server and the user. For example, for the intelligent vehicle, the UI may be an in-vehicle display screen or an in-vehicle touchscreen. A specific form of the UI is not limited in this embodiment of this application.

For example, the download policy includes a download rate corresponding to downloading an upgrade package by an OTA management module. For example, the download policy includes N different download rates, for example, represented by a download-rate 1, a download-rate 2, ..., and a download-rate N, where N is an integer greater than 0. The N different download rates may be understood as N execution modes of the download policy. Alternatively, the download policy may be understood as one or more execution modes including "downloading the upgrade package included in the upgrade task at a rate less than the download-rate 1", "downloading the upgrade package included in the upgrade task at a rate not less than the download-rate 1 and less than the download-rate 2", ..., "downloading the upgrade package included in the upgrade task at a rate not less than the download-rate N-1 and less than the download-rate N", and "downloading the upgrade package included in the upgrade task at a rate not less than the download-rate N". Alternatively, the download policy may be understood as one or more execution modes including "downloading the upgrade package included in the upgrade task at a rate not greater than the download-rate 1", "downloading the upgrade package included in the upgrade task at a rate greater than the download-rate 1 and not greater than the download-rate 2", ..., "downloading the upgrade package included in the upgrade task at a rate greater than the download-rate N-1 and not greater than the download-rate N", and "downloading the upgrade package included in the upgrade task at a rate greater than the download-rate N". It is assumed herein that the N download rates satisfy the following relationship: download-rate i<download-rate j, where i is less than j. It should be noted that the download policy may be implemented in another form, which is not specifically limited.

For example, the detection policy includes a detection condition required for installation of the upgrade package. For example, the detection policy includes M remaining power thresholds, for example, represented by P1, P2, ..., and PM, where M is an integer greater than 0. The M remaining power thresholds may be understood as M different execution modes of the detection policy. Alternatively, the detection policy may be understood as one or more execution modes including "remaining power required to install the upgrade package is not less than P1", "the remaining power required to install the upgrade package is not less than P2", ..., and "the remaining power required to install the upgrade package is not less than PM". Alternatively, the detection policy may be understood as one or more execution modes including "the remaining power required to install the upgrade package is greater than P1", "the remaining power required to install the upgrade package is greater than P2", ..., and "the remaining power required to install the upgrade package is greater than PM". The remaining power may also be understood as a state of charge (state of charge, SOC). P1-PM are decimal numbers between 0 and 1, or numbers less than 1 expressed in percentage, or may be in another form. This is not limited in this embodiment of this application. It should be noted that the detection policy may be implemented in another form, which is not specifically limited.

For example, the storage policy includes storage resources needed to store the upgrade package. For example, the storage resources required for storing the upgrade package are storage resources in K storage components, where K is an integer not less than 1. For example, for the intelligent vehicle, the component may include at least one ECU. For another example, the storage policy is to store the upgrade package on a specific in-vehicle device or specific in-vehicle devices. Further, for example, the storage policy is to save the upgrade package on both the OTA management module and an OTA upgrade module, and the OTA upgrade module may be an upgrade module responsible for installing the upgrade package. For another example, the storage policy is to save the upgrade package only in the OTA management module.

For example, the installation policy includes an installation manner of the upgrade package. For example, the installation policy is a maximum quantity of installation times for installing the upgrade package. The maximum quantity of installation times may be understood as a maximum quantity of times that the terminal device can install the upgrade package after receiving the upgrade task before successfully installing the upgrade package included in the upgrade task. It may be understood that the installation policy may also be a maximum quantity of installation retry times for installing the upgrade package. For example, the installation policy may include P different maximum quantities of installation times, for example, represented by a MAX-NUM 1, a MAX-NUM 2, ..., and a MAX-NUM P, where P is an integer greater than 0. The P different maximum quantities of installation times may be understood as P different execution modes of the installation policy. Alternatively, the installation policy may be understood one or more execution modes including "the maximum quantity of installation times is the MAX-NUM 1", "the maximum quantity of installation times is the MAX-NUM 2", ..., and "the maximum quantity of installation times is the MAX-NUM P".

In this embodiment of this application, the execution policy set includes at least two execution policies. For the sake of clarity, only that the execution policy set includes the first execution policy and the second execution policy is used as an example for description. However, it should be understood that this embodiment of this application is not limited thereto. The following separately describes, with reference to the execution attributes described above, an implementation in which the first execution policy is different from the second execution policy. It should be noted that the execution policy may correspond to one or more execution attributes, which is not limited in this embodiment of this application.

In an implementation, the first execution policy and the second execution policy correspond to different execution attributes.

It may be understood that the first execution policy and the second execution policy correspond to different execution attributes, that is, there is at least one different execution attribute in the execution attributes included in the first execution policy and the second execution policy. For example, the first execution policy corresponds to the installation prompt policy, and the second execution policy corresponds to the download policy. For another example, the first execution policy corresponds to the installation prompt policy and the download policy, and the second execution policy corresponds to the download policy.

In another implementation, the first execution policy and the second execution policy correspond to a same execution attribute, but at least one execution attribute has a different execution mode. For example, both the first execution policy and the second execution policy include the installation prompt policy and the download policy. However, an execution mode of the installation prompt policy corresponding to the first execution policy is different from an execution mode of the installation prompt policy corresponding to the second execution policy. Alternatively, an execution mode of the download policy corresponding to the first execution policy is different from an execution mode of the download policy corresponding to the second execution policy. Alternatively, the execution mode of the installation prompt policy corresponding to the first execution policy is different from the execution mode of the installation prompt policy corresponding to the second execution policy, and the execution mode of the download policy corresponding to the first execution policy is different from the execution mode of the download policy corresponding to the second execution policy. For example, the different execution mode of the at least one execution attribute may include one or more of the following items:
(1) Both the first execution policy and the second execution policy include the installation prompt policy, but the execution modes are different. For example, a font of an installation prompt corresponding to the first execution policy is different from a font of an installation prompt corresponding to the second execution policy, for example, the font of the installation prompt corresponding to the first execution policy is Times New Roman, and the font of the installation prompt corresponding to the second execution policy is Arial. For another example, a font size of the installation prompt corresponding to the first execution policy is different from a font size of the installation prompt corresponding to the second execution policy, for example, the font size of the installation prompt corresponding to the first execution policy is not less than 12, and the font size of the installation prompt corresponding to the second execution policy is less than 12. For another example, a font color of the installation prompt corresponding to the first execution policy is different from a font color of the installation prompt corresponding to the second execution policy, for example, the first execution policy corresponds to the installation prompt displayed in red font, and the second execution policy corresponds to the installation prompt displayed in green font. For another example, a display location of the installation prompt corresponding to the first execution policy is different from a display location of the installation prompt corresponding to the second execution policy, for example, on the UI, the installation prompt corresponding to the first execution policy is displayed above the installation prompt corresponding to the second execution policy. For another example, display brightness of the installation prompt corresponding to the first execution policy is different from display brightness of the installation prompt corresponding to the second execution policy, for example, on the UI, the display brightness of the installation prompt corresponding to the first execution policy is higher than the display brightness of the installation prompt corresponding to the second execution policy. It may be understood that the execution policy set includes at least two installation prompts. It may be understood that the execution policy set includes at least two installation prompts. Further optionally, one of the at least two installation prompts may be a default-configured installation prompt.
(2) Both the first execution policy and the second execution policy include the download policy, but the execution modes are different. For example, an upgrade task download rate corresponding to the first execution policy is different from an upgrade task download rate corresponding to the second execution policy. For example, in the first execution policy, the upgrade package is downloaded at a download rate of not less than 100 Mbps, and in the second execution policy, the upgrade package is downloaded at a download rate of not less than 1 Mbps. For another example, in the first execution policy, the upgrade package is downloaded at the download rate of not less than 100 Mbps, and in the second execution policy, the upgrade package is downloaded at a download rate of less than 100 Mbps. It may be understood that the execution policy set includes at least two download rates. Further optionally, one of the at least two download rates may be a default-configured download rate.
(3) Both the first execution policy and the second execution policy include the detection policy, but execution modes are different. For example, a remaining power threshold corresponding to the first execution policy is different from a remaining power threshold corresponding to the second execution policy. For example, in the first execution policy, when the remaining power threshold is not less than 30%, a master node performs subsequent processing on the upgrade task, for example, controls execution of the upgrade task. In the second execution policy, when the remaining power threshold is not less than 20%, the master node performs subsequent processing on the upgrade task. It may be understood that the execution policy set includes at least two remaining power thresholds. Further optionally, one of the at least two remaining power thresholds may be a default-configured remaining power threshold.
(4) Both the first execution policy and the second execution policy include the storage policy, but execution modes are different. For example, storage resources corresponding to the first execution policy are different from storage resources corresponding to the second execution policy. The intelligent vehicle is used as an example. In the first execution policy, the intelligent vehicle stores, by using K storage components in the vehicle, the upgrade package included in the upgrade task, and in the second execution policy, the intelligent vehicle stores, by using K' components in the vehicle, the upgrade package included in the upgrade task. For another example, in the first execution policy, the intelligent vehicle stores, at the master node and a slave node, the upgrade package included in the upgrade task, where the slave node is the upgrade object corresponding to the upgrade task, and in the second execution policy, the intelligent vehicle stores, only at the master node, the upgrade package included in the upgrade task. It may be understood that the execution policy set includes at least two storage resources. Further optionally, one of the at least two storage resources may be a default-configured storage resource.
(5) Both the first execution policy and the second execution policy include the installation policy, but execution modes are different. For example, a maximum quantity of installation times corresponding to the first execution policy is different from a maximum quantity of installation times corresponding to the second execution policy. For example, in the first execution policy, the terminal device may install the upgrade package at most MAX-NUM 1 times before successfully installing the upgrade package included in the upgrade task, and in the second execution policy, the terminal device may install the upgrade package at most MAX-NUM 2 times before successfully installing the upgrade package included in the upgrade task. It may be understood that the execution policy set includes at least two maximum quantities of installation times. Further optionally, one of the at least two maximum quantities of installation times may be a default-configured maximum quantity of installation times. For another example, an installation sequence corresponding to the first execution policy is different from an installation sequence corresponding to the second execution policy.

It should be noted that, in this embodiment of this application, the execution policy set may further include one or more execution policies other than the first execution policy and the second execution policy. The execution policies in the execution policy set are different from each other, and implementations that are of the execution policies and that are different from each other are described above. Details are not described herein again.

Optionally, the upgrade method shown in FIG. 5 further includes step S502, specifically as follows:
Step S502: The server configures the first execution policy corresponding to the first upgrade task.

In an implementation, the server may directly configure the first execution policy corresponding to the first upgrade task, and the first execution policy corresponds to one or more execution attributes. For example, the first execution policy includes one or more execution attributes: the installation prompt policy, the download policy, the detection policy, the storage policy, and the installation policy. It should be noted that the first execution policy corresponds to the one or more execution attributes, which may also be understood that the first execution policy includes the one or more execution attributes and execution modes corresponding to the one or more execution attributes. For example, the server configures the first execution policy corresponding to the first upgrade task to include the installation prompt policy for displaying the first upgrade task on the UI in which font size. For another example, the server configures the first execution policy corresponding to the first upgrade task to include the installation prompt policy for prompting the first upgrade task on the UI in which font color and the download policy for downloading the upgrade package at which download rate. The first execution policy may also have another form. For details, refer to the detailed description of the execution policy above. Details are not described herein again. The server may configure the first execution policy based on upgrade content or an upgrade function of the first upgrade task, or may configure the first execution policy based on a recommendation of an OEM or a manufacturer. This is not limited in this embodiment of this application.

In another implementation, the server configures a first level of the first upgrade task, and the first level corresponds to the first execution policy.

For example, the first level belongs to a task execution level set, and the task execution level set includes at least two task execution levels. For example, the execution policy set includes a high (high) task execution level and a low (low) task execution level. For another example, the execution policy set includes the high task execution level, the low task execution level, and a middle (middle) task execution level. In this embodiment of this application, classification principles of different task execution levels include one or more of the following items:
(1) The different task execution levels are classified based on function security levels of upgrade objects corresponding to upgrade tasks. For example, an upgrade object with a higher function security level corresponds to a higher task execution level.
(2) The different task execution levels are classified based on different severity of defects repaired by the upgrade tasks. For example, a greater severity of the defect repaired by the upgrade task corresponds to a higher task execution level.
(3) The different task execution levels are classified based on different influences of new functions of the upgrade tasks on driving experience of the user. For example, a greater influence of the new function of the upgrade task on the driving experience of the user corresponds to a higher task execution level.
(4) The different task execution levels are classified based on content of the upgrade tasks differently contributing to business values. For example, a greater contribution of the content of the upgrade task to the business value corresponds to a higher task execution level.
(5) The different task execution levels are classified based on different priorities of the upgrade objects corresponding to the upgrade tasks. For example, a higher priority of the upgrade object corresponds to a higher task execution level.
(6) The different task execution levels are classified based on different urgency degrees of the upgrade tasks. For example, an upgrade package that needs to be installed more in time corresponds to a higher task execution level.
(7) The different task execution levels are classified based on user levels, and the user level may be, for example, a member level of the user. For example, a higher membership level of the user corresponds to a higher task execution level.

It should be noted that the classification principles of the task execution levels may include another form, which is not specifically limited.

Further, for example, the different task execution levels may be used to represent different importance of OTA upgrade tasks. For example, the high task execution level and the low task execution level respectively correspond to an important OTA upgrade task and an unimportant OTA upgrade task. In this embodiment of this application, a classification principle of the OTA upgrade tasks with the different importance may be consistent with the classification principle of the different task execution levels, that is, an upgrade task with a higher task execution level is more important. It may be understood that for an important OTA upgrade task or an OTA upgrade task with the high task execution level, the terminal device needs to upgrade an upgrade package included in the OTA upgrade task faster or more reliably.

A mapping relationship between a task execution level and an execution policy may be specified in a protocol or configured by the server, or may be implemented in another manner. This is not specifically limited in this embodiment of this application.

Step S503: The server sends the first upgrade task to the OTA management module.

Accordingly, the OTA management module receives the first upgrade task. Specifically, the OTA management module receives the first upgrade task.

Further, optionally, the first upgrade task may further include an upgrade package.

Step S504: The OTA management module determines the first execution policy corresponding to the first upgrade task.

In an implementation, the OTA management module may determine the first execution policy based on upgrade content or an upgrade function of the first upgrade task. For example, the first upgrade task is a task for repairing a security function defect, and the OTA management module may determine an execution policy corresponding to security function defect repair as the first execution policy, for example, determine an installation policy (for example, the installation prompt in the font size not less than 12, the installation prompt in the red font, or the installation prompt displayed in the upper half of the UI) that can attract more attention of the user on the UI as the first execution policy. For another example, a storage policy for storing, in the OTA management module and the OTA upgrade module, the upgrade package included in the first upgrade task is the first execution policy. It should be understood that a mapping relationship between an upgrade content or an upgrade function of an upgrade task and an execution policy may be preconfigured by the server or specified in a protocol. Further optionally, the server may configure the mapping relationship to the terminal device by using a network device.

In another implementation, the upgrade method shown in FIG. 3 further includes step S505, specifically as follows:
Step S505: The server sends first indication information to the OTA management module, where the first indication information is used to indicate the first execution policy or indicate the first level. This step is optional.

Accordingly, the OTA management module receives the first indication information. Further, the OTA management module determines the first execution policy based on the first indication information. Specifically, the OTA management module determines the first execution policy based on the first indication information. For example, when the first indication information indicates the first level, the OTA management module determines, based on a mapping relationship between a first level and an execution policy, an execution policy corresponding to the first level as the first execution policy. It should be understood that the mapping relationship is a mapping relationship to be followed by both the server and the terminal device. The mapping relationship may be preconfigured by the server or may be specified in a protocol. Further optionally, the server may configure the mapping relationship to the terminal device by using the network device.

In addition, the first indication information and the first upgrade task may be transmitted by using a same message or transmitted by using different messages. For example, the server sends the first upgrade task and the first execution policy by using a message A, or the server sends the first upgrade task and the first level by using the message A. For another example, the server sends the first upgrade task by using the message A, and sends the first indication information by using a message B.

Step S506: The OTA management module controls execution of the first upgrade task based on the first execution policy.

After obtaining the first upgrade task, the OTA management module executes a subsequent operation of the first upgrade task based on the first execution policy, for example, controls the execution of the first upgrade task.

The OTA management module controls the execution of the first upgrade task through one or more of the following implementations.

In an implementation, the OTA management module sends second information to an installation prompt control module, and the second information is used to indicate an installation prompt corresponding to the first execution policy. For example, for the intelligent vehicle, the second information may be transmitted by using an in-vehicle communication medium (for example, Ethernet, a CAN bus, Bluetooth, Wi-Fi, or another wireless communication medium). The installation prompt control module is a control module for controlling UI display, for example, a CDC. It should be understood that in this manner, the first execution policy includes the installation prompt policy.

After determining the first execution policy, the OTA management module may indicate, by using the second information, the installation prompt control module to display the installation prompt corresponding to the first execution policy on the UI. Specifically, for example, the first execution policy includes displaying the installation prompt of the first upgrade task in the red font. Accordingly, the installation prompt control module displays the installation prompt of the first upgrade task in the red font on the UI after obtaining the second information. For another example, the first execution policy includes displaying the installation prompt of the first upgrade task in the red font in the upper half of the UI. Accordingly, the installation prompt control module displays the installation prompt of the first upgrade task in the red font in the upper half of the UI after obtaining the second information.

Alternatively, the OTA management module may send the second information to an OTA upgrade module, and the OTA upgrade module controls the installation prompt control module to display the installation prompt corresponding to the first execution policy on the UI. The OTA upgrade module may be an upgrade module responsible for installing the upgrade package included in the first upgrade task.

In another implementation, the OTA management module obtains a first upgrade package corresponding to the first upgrade task based on the download policy corresponding to the first execution policy. It should be understood that in this manner, the first execution policy includes the download policy. Specifically, for example, the first execution policy is to download the upgrade package included in the first upgrade task at the rate of not less than 100 Mbps. The OTA management module downloads, at the rate of not less than 100 Mbps from the server, the upgrade package included in the first upgrade task after determining the first execution policy.

In still another implementation, the OTA management module sends third information to a power management module. The third information is used to indicate the power management module to detect remaining power or state of charge of the terminal device, or indicate the power management module to feed back the remaining power or the state of charge of the terminal device. For example, for the intelligent vehicle, the third information may be transmitted by using the in-vehicle communication medium (for example, Ethernet, the CAN bus, Bluetooth, Wi-Fi, or the another wireless communication medium). The power management module is a module that can detect the remaining power or the state of charge of the terminal device, for example, a BMS. It should be understood that in this manner, the first execution policy includes the detection policy. The intelligent vehicle is used as an example. After determining the first execution policy, the OTA management module sends the third information to the power management module to trigger the power management module to detect SOC of the vehicle or indicate the power module to feed back the SOC of the vehicle. After obtaining the SOC of the vehicle, the power management module feeds back the SOC to the OTA management module or the OTA upgrade module. The OTA upgrade module is responsible for installing the upgrade package included in the first upgrade task. Further, if a result of the SOC detected or fed back by the power management module is greater than the remaining power threshold corresponding to the first execution policy, the OTA management module or the OTA upgrade module executes a subsequent operation of the first upgrade task. Specifically, for example, the remaining power threshold corresponding to the first execution policy is 30%. The OTA management module sends the third information to indicate the power management module to detect the SOC of the intelligent vehicle after determining that the first execution policy includes the remaining power threshold. The power management module detects that the SOC of the intelligent vehicle is 70%, and feeds back this result to the OTA management module. Based on the result, the OTA management module determines that the SOC of the intelligent vehicle is greater than the remaining power threshold corresponding to the first execution policy, and then may execute the subsequent operation of the first upgrade task, for example, send the upgrade package included in the first upgrade task to the OTA upgrade module. Alternatively, the third information includes a power threshold and indicates the power management module to determine whether the remaining power or the state of charge of the terminal device is greater than the power threshold. For example, after receiving the third information, the power management module obtains the SOC of the terminal device, compares the SOC with the power threshold included in the third information, and then feeds back a comparison result to the OTA management module. The OTA management module determines whether to perform the subsequent operation of the first upgrade task based on the comparison result. For example, if the comparison result fed back by the power management module is that the SOC of the terminal device is greater than the power threshold included in the third information, the OTA management module sends the upgrade package included in the first upgrade task to the OTA upgrade module.

Alternatively, the OTA management module may send the third information to the OTA upgrade module. Then, the OTA upgrade module controls the power management module to detect the remaining power or the state of charge of the terminal device, or indicate the power management module to feed back the remaining power or the state of charge of the terminal device, or indicate the power management module to feed back the comparison result between the SOC of the terminal device and the power threshold included in the third information. Specifically, For example, the remaining power threshold corresponding to the first execution policy is 30%. The OTA management module sends the third information to the OTA upgrade module, and the third information indicates the first execution policy. After determining that the first execution policy includes the remaining power threshold, the OTA upgrade module indicates the power management module to detect the SOC of the intelligent vehicle. Correspondingly, the power management module may feed back a detected SOC result or the comparison result between the SOC and the power threshold to the OTA upgrade module. The OTA upgrade module performs the subsequent operation of the first upgrade task based on the result. For example, if the SOC result is greater than the remaining power threshold corresponding to the first execution policy, the OTA upgrade module installs the upgrade package included in the first upgrade task.

In yet another implementation, the OTA management module controls storage of the upgrade package included in the first upgrade task based on the storage policy corresponding to the first execution policy. It should be understood that in this manner, the first execution policy includes the storage policy. Specifically, for example, the first execution policy is to store the upgrade package in the OTA management module and the OTA upgrade module. After determining the first execution policy, the OTA management module distributes the upgrade package to an OTA upgrade module in addition to saving the upgrade package in the OTA management module, and indicates the OTA upgrade module to save the upgrade package. The OTA upgrade module is responsible for installing the upgrade package included in the first upgrade task. Further, for example, after the upgrade package is successfully installed, the upgrade package may be removed from the OTA management module and the OTA upgrade module.

In yet another implementation, the OTA management module sends fourth information to the OTA upgrade module, and the fourth information is used to indicate a maximum quantity of installation times of the upgrade package included in the first upgrade task. For example, for the intelligent vehicle, the fourth information may be transmitted by using the in-vehicle communication medium (for example, Ethernet, the CAN bus, Bluetooth, Wi-Fi, or the another wireless communication medium). The OTA upgrade module is responsible for installing the upgrade package included in the first upgrade task. Specifically, the intelligent vehicle is used as an example. The OTA management module sends the fourth information to the OTA upgrade module after determining the first execution policy. After obtaining the fourth information, the OTA upgrade module installs the upgrade package included in the first upgrade task based on the maximum quantity of installation times indicated by the fourth information. For example, the maximum quantity of installation times is N, and it should be understood that the OTA upgrade module may repeatedly install the upgrade package N times before successfully installing the upgrade package.

In this embodiment of this application, optionally, different execution policies may correspond to different upgrade tasks. For ease of description, in this embodiment of this application, an upgrade task corresponding to the first upgrade policy is described as the first upgrade task, and an upgrade task corresponding to a second upgrade policy is described as a second upgrade task. For example, the first upgrade task is a high-level OTA upgrade task, and the second upgrade task is a low-level OTA upgrade task. The different upgrade tasks are executed based on differentiated execution policies, so that importance degrees of the different tasks can be differentiated, thereby ensuring that the important OTA upgrade task can be executed more preferentially or more reliably at a vehicle side. Specifically:

For example, the high-level OTA upgrade task and the low-level OTA upgrade task are distinguished based on different installation prompt policies, so that the user can more easily notice the higher-level OTA upgrade task, and then the user can faster and more easily confirm and execute the upgrade task. For example, attention of the user to the high-level OTA upgrade task may be improved by using different fonts, different font sizes, different font colors, or different display brightness of installation prompts to display the installation prompts of the different tasks. For another example, when there is a plurality of upgrade task reminders, an installation prompt sequence of the high-level OTA upgrade task is placed before an installation prompt sequence of the low-level OTA upgrade task on the UI interface, so that the high-level OTA upgrade task can have a greater chance of being confirmed by the user.

For another example, the high-level OTA upgrade task and the low-level OTA upgrade task are distinguished based on different download policies, so that an upgrade package of the OTA upgrade task can be downloaded to the terminal device at a faster rate, and the upgrade task can be further executed faster. For example, in a channel supporting quality of service (quality of service, QoS), a download priority of the upgrade package included in the high-level OTA upgrade task is higher than a download priority of an upgrade package included in the low-level OTA upgrade task, and may also be higher than that of an upgrade package of an ordinary vehicle network service, for example, upgrade packages corresponding to a music and a map included in the vehicle network service. A differentiated service Diffserv is used as an example. A download rate of the upgrade package of the ordinary vehicle network service may be configured as a low priority, and a download rate of the upgrade package of the high-level OTA upgrade task may be configured as a high priority, so that the server can preferentially transmit the upgrade package of the high-level OTA upgrade task, or the server preferentially transmits the upgrade package of the high-level OTA upgrade task by using the network device.

For another example, the high-level OTA upgrade task and the low-level OTA upgrade task are distinguished based on different detection policies, which can ensure reliable completion of the high-level OTA upgrade task. For example, the high-level OTA upgrade task may be executed only when the SOC of the intelligent vehicle is more than 30%, and the low-level OTA upgrade task may be executed when the SOC of the intelligent vehicle is more than 20%. In this way, a probability that execution of the high-level OTA upgrade task fails due to power exhaustion can be reduced.

For another example, the high-level OTA upgrade task and the low-level OTA upgrade task are distinguished based on different storage policies, which can ensure that more storage resources are used for the high-level OTA upgrade task, thereby ensuring smooth completion of the high-level OTA upgrade task. For example, the upgrade package of the high-level OTA upgrade task is kept on one backup component or a plurality of partial components. When the upgrade package is damaged or a read error occurs during storage or installation of an upgrade component, the intelligent vehicle may fast re-execute the upgrade task by using a backup upgrade package, thereby increasing a probability of successfully executing the high-level OTA upgrade task. However, the low-level OTA upgrade task may not be backed up. When a problem occurs, the upgrade task fails. The intelligent vehicle may re-download and install the upgrade package, and an installation time required is longer than that of the high-level OTA upgrade task. In this embodiment of this application, the component may be a component including at least one ECU.

For another example, the high-level OTA upgrade task and the low-level OTA upgrade task are distinguished based on different installation policies, which can ensure that the upgrade package of the high-level OTA upgrade task can be installed more reliably and faster. For example, because installation of the upgrade package of the upgrade task may fail, the high-level OTA upgrade task may be configured with more installation retry times to improve an installation success rate. For another example, when there is a plurality of OTA upgrade tasks, the intelligent vehicle may preferentially install the upgrade package included in the high-level OTA upgrade task.

Alternatively, in this embodiment of this application, the different execution policies may also correspond to different upgrade sub-tasks. One upgrade task may include a plurality of upgrade sub-tasks. For example, the server may classify specific tasks included in one upgrade task based on functions implemented by the upgrade task, for example, use a task of upgrading a battery control function that is included in the upgrade task as one sub-task, and use a task of upgrading a chassis control function that is included in the upgrade task as another sub-task. For another example, the server may classify a plurality of sub-tasks included in the upgrade task based on upgrade components corresponding to the upgrade task, for example, use a task that corresponds to the FOTA and that is in the upgrade task as one sub-task, and use a task that corresponds to the SOTA and that is in the upgrade task as another sub-task. It may be understood that in this case, the first indication information may indicate execution policies corresponding to one or more upgrade sub-tasks, or may indicate task levels corresponding to the one or more upgrade sub-tasks. The task level corresponds to an execution policy of the sub-task with the task level. Alternatively, the first indication information still indicates the execution policy or a task level of the upgrade task including the plurality of upgrade sub-tasks. The OTA management module may determine, based on the first indication information in combination with another determining manner, the execution policies or the task levels corresponding to the sub-tasks included in the upgrade task. The another determining manner may be, for example, a default task level classification manner or an execution policy determining manner, or may have another form, which is not specifically limited.

With reference to FIG. 5, in another implementation, a mapping relationship between an upgrade task and a task level may be saved on a server side, and a mapping relationship between a task level and an execution policy may be implemented on a terminal device side. To be specific, the server generates the first upgrade task, the first level corresponding to the first upgrade task belongs to the task execution level set, and the task execution level set includes at least the two task execution levels. Accordingly, after receiving the first upgrade task, the OTA management module may determine the first execution policy based on the first level and the mapping relationship between a first level and an execution policy. Alternatively, in this implementation, the upgrade task may be replaced with an upgrade sub-task. To be specific, a mapping relationship between an upgrade sub-task and a task level may be saved on the server side, and a mapping relationship between a task level corresponding to an upgrade sub-task and an execution policy corresponding to the upgrade sub-task may be implemented on the terminal device side.

It should be noted that in this embodiment of this application, a classification principle of an upgrade sub-task level and a classification principle of an upgrade task level may be the same or may be different, which is not specifically limited.

According to this manner shown in this embodiment of this application, the execution policy set including the at least two execution policies is designed, so that the OTA upgrade task can be flexibly scheduled. Further, tasks with different levels can be distinguished based on the different execution policies included in the execution policy set, thereby ensuring that the important OTA upgrade task can be completed more reliably and faster.

The foregoing describes, with reference to FIG. 5, the upgrade method provided in this embodiment of this application. The following describes in detail, with reference to FIG. 6 to FIG. 8, apparatuses provided in embodiments of this application.

FIG. 6 is a schematic block diagram of a communication apparatus according to an embodiment of this application. As shown in FIG. 6, the communication apparatus may include a processor and a transceiver, to perform the method in any one of the foregoing possible implementations. The processor may be configured to perform internal processing of the apparatus, for example, determine an execution policy corresponding to an upgrade task, for another example, control execution of the upgrade task based on the execution policy, for still another example, generate the upgrade task. The transceiver is configured to perform functions related to transmission and reception, for example, transmit information to another apparatus or receive information from another apparatus.

The communication apparatus may be an apparatus of a terminal device, and the communication apparatus may be configured to perform any one of the foregoing methods performed by the terminal device. Alternatively, the communication apparatus may be an apparatus of a server, and the communication apparatus may be configured to perform any one of the foregoing methods performed by the server.

In an implementation, the communication apparatus is a communication chip, and the transceiver may be an input/output circuit or a port of the communication chip. In another implementation, the transceiver included in the communication apparatus may be a transmitter and a receiver, or a transmitter machine and a receiver machine.

In still another implementation, the communication apparatus further includes modules configured to perform the method in any one of the possible implementations in the embodiments of this application.

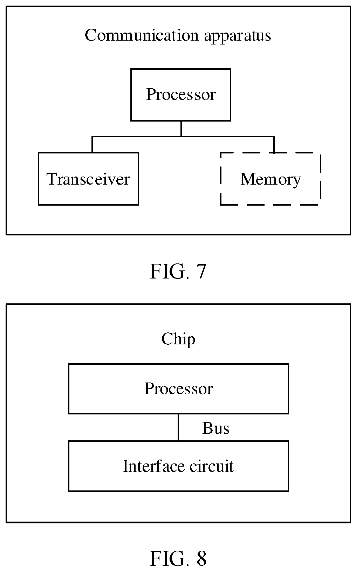

In still another implementation, the communication apparatus may further include a memory, as shown in a dashed box in FIG. 7. FIG. 7 is a schematic block diagram of a communication apparatus according to an embodiment of this application. The memory is coupled to a processor and a transceiver included in the communication apparatus. It may be understood that the memory, the processor, and the transceiver communicate with each other through internal connection paths. Specifically, the processor may be configured to execute instructions in the memory, so that the apparatus is enabled to perform the method in any one of the possible implementations in the embodiments of this application.

In this embodiment of this application, the communication apparatus may correspond to the terminal device or the OTA management module in any one of the possible implementations in the embodiments of this application. The communication apparatus may be the terminal device or a chip disposed in the terminal device, or may be the OTA management module or a chip disposed in the OTA management module.

In this embodiment of this application, the communication apparatus may correspond to the server in any one of the possible implementations in the embodiments of this application. The communication apparatus may be the server or a chip disposed in the server.

In addition, an embodiment of this application further provides a chip, as shown in FIG. 8. FIG. 8 is a schematic diagram of a structure of a chip. The chip includes one or more processors and an interface circuit, and is configured to perform the method in any one of the possible implementations in the embodiments of this application. Optionally, the chip may also include a bus.

For example, the processor is an integrated circuit chip that has a signal processing capability. For example, the processor may be a field programmable gate array (field programmable gate array, FPGA), may be a general-purpose processor, a digital signal processor (digital signal processor, DSP), an application specific integrated circuit (application specific integrated circuit, ASIC) or another programmable logic device, a discrete gate or a transistor logic device, or a discrete hardware component, may be a system on chip (system on chip, SoC), may be a central processor unit (central processor unit, CPU), may be a network processor (network processor, NP), may be a micro controller unit (micro controller unit, MCU), or may be a programmable logic device (programmable logic device, PLD) or another integrated chip. The processor can implement or perform the methods, the steps, and the logical block diagrams disclosed in embodiments of this application. The general-purpose processor may be a microprocessor, or the processor may be any conventional processor. The steps of the methods disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads the information in the memory, and performs the steps in the method together with hardware in the processor.

The interface circuit may be used to transmit or receive data, instructions, or information. The processor may process the data, the instructions, or other information received by using the interface circuit, and may transmit processed information by using the interface circuit.

Optionally, the chip also includes a memory, and may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. For example but not for limitation, many forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, the chip may be used in the communication apparatus included in embodiments of this application.

It should be noted that functions respectively corresponding to the processor and the interface circuit may be implemented by hardware design, software design, or a combination of software and hardware, which is not limited herein.

It should be noted that the memories of the systems and the methods described in this specification are intended to include, but are not limited to, these and any other suitable types of memories.

This application further provides a computer program product, and the computer program product includes computer program code. When the computer program code is run on a computer, the computer is enabled to perform the method performed by the terminal device, the server, the OTA management module, or the OTA control module in any one of the foregoing method embodiments.

This application further provides a computer-readable medium, and the computer-readable medium stores program code. When the program code is run on a computer, the computer is enabled to perform the method performed by the terminal device, the server, the OTA management module, or the OTA control module in any one of the foregoing method embodiments.

This application further provides a system, and the system includes a terminal device and a server, or includes an OTA management module and a server, or includes an OTA management module, an OTA upgrade module, and a server.

An embodiment of this application further provides a processing apparatus, including a processor and an interface. The processor is configured to perform the method performed by the terminal device, the OTA management module, or the OTA control module in any one of the possible implementations in the embodiments of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to the embodiments of this application are completely or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from one website site, computer, server, or data center to another website site, computer, server, or data center in a wired (for example, coaxial cable, optical fiber, or digital subscriber line (digital subscriber line, DSL)) or wireless (for example, infrared, wireless, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disc (solid state disc, SSD)), or the like.

The terms "component", "module", "system", and the like used in this specification are used to refer to a computer-related entity, hardware, firmware, a combination of hardware and software, software, or software in execution. For example, the component may be, but not limited to, a process running on a processor, a processor, an object, an executable file, a thread of execution, a program, or a computer. Applications running on computing devices, and the computing devices can all be components according to the drawings. One or more components may reside in a process or a thread of execution, and the components may be located on one computer or distributed between two or more computers. In addition, these components may execute instructions from various computer-readable media in which various data structures are stored. The components may communicate via local or remote processes based on, for example, signals having one or more data groups (for example, data from two components interacting with another component between a local system, a distributed system, or a network; for another example, the Internet interacting with other systems via signals).

A person of ordinary skill in the art may be aware that units and algorithm steps in examples described with reference to embodiments disclosed in this specification can be implemented as electronic hardware or a combination of computer software and electronic hardware. Whether these functions are implemented by using hardware or software depends on specific application of the technical solution and design constraints. A person skilled in the art may use different methods to implement the described functions for each particular application, but it should not be considered that the implementation goes beyond the scope of this application.

A person skilled in the art can clearly understand that, for convenience and brevity of description, reference may be made to corresponding processes in the method embodiments for specific operating processes of the foregoing system, apparatus, and unit. Details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, functional units in the embodiments of this application may be integrated into one processing unit, or each of the units may exist alone physically, or two or more units are integrated into one unit.

The foregoing descriptions are merely a specific implementation of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An upgrade method, comprising:
receiving a first upgrade task;
determining a first execution policy corresponding to the first upgrade task, wherein the first execution policy belongs to an execution policy set, the execution policy set comprises a second execution policy, and the first execution policy is different from the second execution policy; and
controlling execution of the first upgrade task based on the first execution policy.

2. The method according to claim 1, wherein before the determining a first execution policy corresponding to the first upgrade task, the method further comprises:
obtaining first indication information, wherein the first indication information is used to indicate the first execution policy or indicate a first level of the first upgrade task, and the first execution policy corresponds to the first level.

3. The method according to claim 1 or 2, wherein the execution policy set comprises at least two installation prompts corresponding to an upgrade task, and the first execution policy and the second execution policy correspond to different installation prompts.

4. The method according to claim 3, wherein the installation prompt comprises one or more of the following items:
a display location of the installation prompt, display brightness of the installation prompt, or a font size of the installation prompt.

5. The method according to any one of claims 1 to 4, wherein the execution policy set comprises at least two download rates corresponding to the upgrade task, and the first execution policy and the second execution policy correspond to different download rates of the upgrade task.

6. The method according to any one of claims 1 to 5, wherein the execution policy set comprises at least two remaining power thresholds corresponding to the upgrade task, and the first execution policy and the second execution policy correspond to different remaining power thresholds.

7. The method according to any one of claims 1 to 6, wherein the execution policy set comprises at least two storage resources corresponding to the upgrade task, and the first execution policy and the second execution policy correspond to different storage resources.

8. The method according to claim 7, wherein storage resources corresponding to the first execution policy comprise storage resources located in K storage components, wherein K is an integer not less than 1, and the storage component comprises at least one electronic control unit.

9. The method according to any one of claims 1 to 8, wherein the execution policy set comprises at least two maximum quantities of installation times corresponding to the upgrade task, and the first execution policy and the second execution policy correspond to different maximum quantities of installation times.

10. An upgrade method, comprising:
generating a first upgrade task, wherein a first execution policy corresponding to the first upgrade task belongs to an execution policy set, the execution policy set comprises a second execution policy, and the first execution policy is different from the second execution policy; and
sending the first upgrade task.

11. The method according to claim 10, wherein after the generating a first upgrade task, the method further comprises:
sending first indication information, wherein the first indication information is used to indicate the first execution policy or indicate a first level of the first upgrade task, and the first execution policy corresponds to the first level.

12. The method according to claim 10 or 11, wherein the execution policy set comprises at least two installation prompts corresponding to an upgrade task, and the first execution policy and the second execution policy correspond to different installation prompts.

13. The method according to claim 12, wherein the installation prompt comprises one or more of the following items:
a display location of the installation prompt, display brightness of the installation prompt, or a font size of the installation prompt.

14. The method according to any one of claims 10 to 13, wherein the execution policy set comprises at least two download rates corresponding to the upgrade task, and the first execution policy and the second execution policy correspond to different download rates of the upgrade task.

15. The method according to any one of claims 10 to 14, wherein the execution policy set comprises at least two remaining power thresholds corresponding to the upgrade task, and the first execution policy and the second execution policy correspond to different remaining power thresholds.

16. The method according to any one of claims 10 to 15, wherein the execution policy set comprises at least two storage resources corresponding to the upgrade task, and the first execution policy and the second execution policy correspond to different storage resources.

17. The method according to claim 16, wherein storage resources corresponding to the first execution policy comprise storage resources located in M storage components, wherein M is an integer not less than 1, and the component is a component comprising at least one electronic control unit.

18. The method according to any one of claims 10 to 17, wherein the execution policy set comprises at least two maximum quantities of installation times corresponding to the upgrade task, and the first execution policy and the second execution policy correspond to different maximum quantities of installation times.

19. A communication apparatus, comprising:
a transceiver, configured to receive a first upgrade task; and
a processor, configured to determine a first execution policy corresponding to the first upgrade task, wherein the first execution policy belongs to an execution policy set, the execution policy set comprises a second execution policy, and the first execution policy is different from the second execution policy; and
the processor is further configured to control execution of the first upgrade task based on the first execution policy.

20. The apparatus according to claim 19, wherein the transceiver module is further configured to:
obtain first indication information, wherein the first indication information is used to indicate the first execution policy or indicate a first level of the first upgrade task, and the first execution policy corresponds to the first level.

21. The apparatus according to claim 19 or 20, wherein the execution policy set comprises at least two installation prompts corresponding to an upgrade task, and the first execution policy and the second execution policy correspond to different installation prompts.

22. The apparatus according to any one of claims 19 to 21, wherein the execution policy set comprises at least two remaining power thresholds corresponding to the upgrade task, and the first execution policy and the second execution policy correspond to different remaining power thresholds.

23. A communication apparatus, comprising:
a processor, configured to generate a first upgrade task, wherein a first execution policy corresponding to the first upgrade task belongs to an execution policy set, the execution policy set comprises a second execution policy, and the first execution policy is different from the second execution policy; and
a transceiver, configured to send the first upgrade task.

24. The apparatus according to claim 23, wherein the transceiver is further configured to:
send first indication information, wherein the first indication information is used to indicate the first execution policy or indicate a first level of the first upgrade task, and the first execution policy corresponds to the first level.

25. The apparatus according to claim 23 or 24, wherein the execution policy set comprises at least two installation prompts corresponding to an upgrade task, and the first execution policy and the second execution policy correspond to different installation prompts.

26. A terminal device, comprising a communication apparatus configured to perform the method according to any one of claims 1 to 9.

27. A server, comprising a communication apparatus configured to perform the method according to any one of claims 10 to 18.

28. A chip, comprising one or more processors and an interface circuit, wherein the interface circuit is configured to provide information input and/or output for the one or more processors, and the chip is configured to perform the method according to any one of claims 1 to 9 or claims 10 to 18.

29. A computer-readable storage medium, wherein the computer-readable storage medium stores a computer program or instructions, and when the computer program or the instructions is or are executed by a communication apparatus, the method according to any one of claims 1 to 9 or claims 10 to 18 is implemented.

30. A computer program product, wherein when the computer program product runs on one or more processors, the method according to any one of claims 1 to 9 or claims 10 to 18 is implemented.
